# EUROPÄISCHE PATENTSCHRIFT

(11) **EP 0 799 772 B1**
(45) Veröffentlichungstag und Bekanntmachung des Hinweises auf die Patenterteilung: **24.05.2000**
(21) Anmeldenummer: 97105194.1
(22) Anmeldetag: 27.03.1997
(51) Int. Cl.: B65D 41/34, B29C 45/44

(54) **Schraubverschlusskappe aus Kunststoff und Verfahren zu deren Herstellung**
Plastic screw cap and method for manufacturing the same
Capuchon à vis en matière plastique et procédé de fabrication d'un tel capuchon

(30) Priorität: 03.04.1996 DE 19613364
(43) Veröffentlichungstag der Anmeldung: 08.10.1997
(73) Patentinhaber: Weiss K.G., 67551 Worms (DE)
(72) Erfinder: Weiss, Jürgen, 67551 Worms (DE)
(74) Vertreter: Schuster, Gregor

(56) Entgegenhaltungen:
- EP-A- 0 154 603
- EP-A- 0 254 673
- EP-A- 0 306 259
- WO-A-88/05754
- WO-A-94/18084
- DE-A- 4 121 618
- DE-A- 4 121 619
- DE-A- 19 520 372
- FR-A- 2 619 552

## Beschreibung

Die Erfindung betrifft Schraubverschlußkappen aus Kunststoffmaterial zum Verschließen von Behältern, insbesondere von Flaschen mit originalabgefüllten Getränken, sowie ein Verfahren zur Herstellung solcher Schraubverschlußkappen.

Flaschenschraubverschlüsse sind aus der deutschen Patentschrift DE 41 21 619 C2 bekanntgeworden. Nachteilig ist hierbei die Tatsache, daß dort eine voll wirksame Untergreifung der Unterkante der Flaschenmündung nicht verwirklicht wurde. Mit Rücksicht auf die bei der Herstellung solcher einstükkiger Verschlußkappen zu beachtenden Entformungsbedingungen wurden nämlich die Vorsprünge als bewegliche Fahnen ausgebildet. Aber ohne eine exakte Positionierung nach Aufbringen der Kappe besteht die Gefahr einer Fehlfunktion. Um diese einzuschränken, wurden diese Fahnen hier offensichtlich aufwendig gestaltet und in größerer Anzahl vorgesehen. Das hat andererseits wieder den Nachteil einer Bremswirkung beim Aufsetzen in den mit sehr hohen Taktgeschwindigkeiten arbeitenden Abfüllmaschinen der Getränkeindustrie und einen Mehrverbrauch von Kunststoffmaterial.

Im Falle eines Verschlusses gemäß der deutschen Patentschrift DE 41 21 618 C2 gilt eine ähnliche Problematik. Die beim erstmaligen Öffnen als Widerhaken dienenden fahnenartigen Vorsprünge bilden zunächst während des maschinellen Aufschraubens oder Aufpressens der Verschlußkappe mit der Innenfläche des Sicherungsringes einen spitzen Winkel und werden beim Aufbringen nach oben gebogen. Beim Passieren der Unterkante des Flaschenmündungsbereiches sollen dann die unterschiedlich gestalteten und mit Rückstellrippen versehenen Widerhaken oder Fahnen ohne bleibendes Aufdehnen oder gar Aufsprengen des Sicherungsringes in eine stumpfe schräg in Richtung Flaschenöffnung bzw. Unterkante weisende Position gelangen. Dieses Konzept erfordert infolge der komplexen geometrischen Gestaltung ein sehr aufwendiges Werkzeug zur Herstellung solcher Verschlüsse, ohne daß die Erreichung der genannten Ziele gesichert erscheint.

Ferner ist aus der europäischen Patentschrift EP 0 254 673 B1 ein Sicherungsring bekannt geworden, der Nocken und Stege in verschiedener Zahl samt einem Einschnitt in den Ring aufweist, der unmittelbar benachbart zu einem Nocken vorgesehen ist, so daß beim Öffnen ein längerer Abschnitt des Ringes von der Kappe wegplatzt und absteht. Dieses auch bei anderen bekannten Ausführungsformen eintretende Ergebnis wird aus funktionalen und ästhetischen Gründen hier nicht angestrebt.

Auch die aus der europäischen Patentschrift EP 0 154 603 B1 bekanntgewordenen Verriegelungsnocken erfüllen diese Absichten nicht. Nachteilig ist insbesondere die Tatsache, daß dort wiederum eine voll wirksame Untergreifung der Unterkante der Flaschenmündung nicht verwirklicht wurde mit Rücksicht auf die bei der Herstellung solcher einstückiger Verchlußkappen zu beachtenden und in dieser Schrift auch angesprochenen Entformungsbedingungen, wonach die Schulter des Nockenprofils mit der Mittelachse einen Winkel von nicht mehr als 75 bis 85 Grad einnehmen sollte. Das ist schon sehr hoch gegriffen und bedeutet jedenfalls, daß die im Gegensatz zu Fahnen starr angeformten Verriegelungsnocken eine schräg nach unten statt rechtwinklig zur Mittelachse weisende Untergreifungsschulter aufweisen müssen.

Sofern man diese Untergreifung verbessern wollte, ist hierzu die Verwendung eines formstabilen Verriegelungsnockens mit einer geeigneten Schulter bzw. Untergreifungsfläche mit annähernd rechtwinkligem Verlauf erwünscht. Tatsächlich scheint ein solcher rechtwinkliger Verlauf schon einmal vorgeschlagen worden zu sein, und zwar in der PCT-Offenlegungsschrift WO 88/05754, Fig. 1. Dieser Vermutung stehen aber massive Einwände entgegen. Zunächst wird dort ausdrücklich und zutreffend darauf verwiesen, daß die dort Oberseite genannte Untergreifungskante in der Regel 50-60 Grad (zur Mittelachse) aufweist. Die obere Grenze entspricht etwa dem gezeichneten Beispiel der vorgenannten EP-Patentschrift. Diese PCT-Schrift beschäftigt sich nun nicht mit den Problemen der Untergreifung und der Entformung, sondern allein mit der schon bezüglich Fahnen erwähnten Stauproblematik beim maschinellen Aufbringen bzw. Aufpressen der Kappen, was maßgeblich von der Gestaltung der Unterkante abhängt. Vollends unglaubwürdig wird der Vorschlag von 90 Grad etc. angesichts des weiten Hineinragens des gezeichneten Nockenprofils in die Nähe der Mittelachse. Ein solches Nockenprofil läßt sich, wenn überhaupt, im Gegensatz zu den dortigen Behauptungen nur mit einer ganz erheblichen und somit untragbaren Verteuerung des Herstellungs- und Entformungsverfahrens realisieren. Und schließlich ist das maschinelle Aufbringen von Verschlußkappen mit dem gezeichneten, weit vorspringenden Nockenprofil absolut utopisch, schon weil der Sicherungsring wegen Überdehnung reißen würde. Der Fachmann wird also diesen Vorschlag nicht aufgreifen und bei abgeschrägten Schultern bleiben, etwa bei den genannten 60 Grad.

Soweit man bisher überhaupt 90 Grad realisiert haben sollte, benötigte man hierfür zwei voneinander getrennte Fertigungsschritte. Im ersten Schritt werden die Hintergreifungselemente parallel zur Mittelachse bzw. Entformungsachse angeformt und müßten dann in einem gesonderten Nachformungsprozeß in ihre wirksame nach innen weisende Position gebracht werden. Vor der Anwendung diese teuren Prozesses weicht der Fachmann zurück.

Aufgabe der vorliegenden Erfindung ist es, die vorgenannten Nachteile des Standes der Technik zu überwinden und eine Schraubverschlußkappe zu schaffen, die einerseits eine voll wirksame Untergreifung der Unterkante der Flaschenmündung gewährleistet, so daß ein nicht bemerkbares Öffnen des Behälters bzw. eine Manipulation der Originalabfüllung, insbes. auch bei Getränken, ausgeschlossen ist. Dabei sollten solche Verriegelungsnocken konzipiert werden, die in einem einstufigen Herstellungsprozeß ohne anschließende weitere Verformungsprozesse hergestellt werden können und weiterhin sowohl bezüglich des Entformungs-, als auch des maschinellen Aufbringungsprozesses sowie der anfallenden Herstellungskosten optimal gestaltet sind.

Die Lösung der vorgenannten Aufgabe erfolgt mit Hilfe einer Schraubverschlußkappe, welche die in Anspruch 1 genannten Merkmale aufweist. Sie bedurfte angesichts der obengeschilderten Problematik vor ihrer Realisierung aufwendiger Überlegungen und langwieriger Versuche.

Merkmale der Erfindung und einiger Ausführungsformen sollen zunäschst noch näher erläutert werden wie folgt:

Die Merkmale des ersten Teils von Anspruch 3 sind dahingehend zu verstehen, daß bei Vorhandensein von insgesamt zwei, sich normalerweise gegenüberliegenden Verbindungsstegen insgesamt zwei Verriegelungsnocken vorhanden sind, und zwar jeweils eine Verriegelungsnocke etwa mittig zwischen zwei Verbindungsstegen. Ebenso sind zwei sich am Ringumfang ebenfalls etwa gegenüberliegende Sollbruchstellen vorhanden, die sich jeweils in Nähe eines der beiden Verbindungsstege befinden. Mit dieser Konfiguration wird erreicht, daß beim Öffnen des Behälters ein etwa symmetrisches Kräftedreieck Steg-Verriegelungsnocken-Steg entsteht, das eine in Bezug auf den Öffnungsvorgang frühzeitige Keil- bzw. Sprengwirkung auf die Sollbruchstelle ausübt, ohne daß größere Kräfte notwendig sind. Entsprechend kommt es beim Öffnen der Verschlußkappe zu zwei Rissen im Sicherungsring und damit zu zwei etwa gleich langen und umfangssymmetrisch entstehenden Abrißstreifen, die an den beiden Verbindungsstegen noch mit dem Hauptkörper der Verschlußkappe verbunden sind. Im Falle von drei Verbindungsstegen sind drei zwischen ihnen liegende Verriegelungsnocken und drei jeweils gleichsinnig nahe den 3 Stegen angeordnete Sollbruchstellen vorhanden, womit beim Öffnen drei etwa gleich lange Abrißstreifen entstehen usw..

Die neuartige Kombination der annähernd senkrecht bzw. parallel zur Mittelachse verlaufenden Sollbruchstellen mit einer ihnen zugeordneten hauptkörpernäheren Aussparung des Sicherungsringes gemäß Anspruch 4 gewährleistet ein in Bezug auf die auftretenden Verformungskräfte beim Aufbringen und späteren ersten Öffnen optimales Dehn- bzw. Reißverhalten des Sicherungsringes. Die Aufreißstrecke und damit die Aufreißkraft wird verringert und ein wirksameres/früheres Aufreißen des Sicherungsringes erreicht.

Das ebenfalls neuartige Merkmal bettreffend der Auslaufkontur von Verriegelungsnocken ist von besonderer Bedeutung bezüglich der von jeher mehr oder weniger problematischen Entformung des Sicherungsringes.

Zunächst seien zur Funktion und Gestaltung des zur Erfindung gehörigen Verriegelungsnockens weitere erfindungswesentliche Angaben gemacht, wie sie zum Teil Gegenstand von Unteransprüchen sind:

Während man beim Stand der Technik aus Herstell- bzw. Entformungsgründen der Untergreifungsfläche eine Neigung von weniger als 70 Grad zuweisen muß, kann gemäß der Erfindung also eine rechtwinkelige Gestaltung des Verriegelungsnockennprofils verwirklicht werden, wobei vom rechten Winkel in Anpassung an die Form der Flaschenmündung um 5 Grad oder in Sonderfällen auch mehr abgewichen werden kann.

Dabei ist die Auswahl der optimalen Abmessungen der Verriegelungsnocken hinsichtlich der konkurrierenden Merkmale Wirksamkeit Entformbarkeit/ Aufbringbarkeit alles andere als selbstverständlich, wie die wenig geeignete Gestaltung der Vorsprünge bzw. Fahnen gemäß der DE 41 21 619 C2 und das noch problematischere Profil der sog. Widerhaken gemäß WO 88/05754 zeigen, die zusätzlich noch wegen ihres erhöhten Verbrauchs von Kunststoffmasse zu kritisieren sind. Im Rahmen der vorliegenden Erfindung wurden nach umfangreichen Überlegungen die folgenden Abmessungen als optimal ermittelt: Die maximale Untergreifung in radialer Richtung soll je nach Durchmesser des Flaschenverschlusses 1,0 bis 1,8 mm und ihre Länge, d.h. ihre entlang der Innenseite des Sicherungsringes umlaufende Ausdehnung etwa 3 bis 10 mm aufweisen.

Die Zuverlässigkeit und Wirksamkeit der Verriegelungsnocken im Gegensatz etwa zu Fahnen u. dergl. wird durch die entlang ihrer Basis erfolgten starren Anformung an die Mantelfläche des Sicherungsringes und ihre etwa rechtwinklig zur Mittelachse von Kappe und Flaschen- oder Behältergewinde verlaufende Unterkante der die Behälter- oder Flaschenmündungszone untergreifenden Schulter noch zusätzlich gewährleistet. Dabei weisen die Verriegelungsnocken in Anpassung an die Unterkante der Behälteiverschlußzone bevorzugt eine Abweichung von +/- 5 Grad vom rechten Winkel zur Mittelachse auf. Und infolge ihrer vorgenannten, bevorzugten Abmessungen lassen sie sich die ohne übermäßigen werkzeugseitigen Aufwand durch "Herausdrehen" aus den Werkzeugausnehmungen unter kurzzeitiger elastisch-reversibler Ausweitung des Sicherungsringes einstufig in einer Form herstellen und entformen, wobei das spätere maschinelle Aufschrauben bzw. Aufpressen auf den Mündungsbereich der Flaschen bzw. Behälter bei hohen Geschwindigkeiten ebenfalls ohne Überdehnung oder Beschädigung des Sicherungsringes möglich ist. Andererseits ermöglicht die erfindungsgemäße formstabile Gestaltung des Nockenprofils ein alsbaldiges zuverlässiges Aufsprengen des Sicherungsringes beim ersten Öffnungsversuch im Gegensatz zu solchen bekannten Rastelementen, die während des Herstell- und/oder Aufbringungsprozesses Deformationen und ggf. Rückstellungen unterliegen, wobei viele der bekannten Flaschenkappen gute Ergebnisse nur im Falle enger geometrischer Toleranzen bei Kappe und Behältermündung wie auch bei den Materialeigenschaften der verwendeten Kunststoffe (Dehnung, Reißfestigkeit - in Abhängigkeit von den Prozeßtemperaturen usw.) liefern.

Zu weiter bevorzugten Merkmalen der Schraubverschlußkappe gehört die an sich bekannte Anbringung der Feinstege. Erfindungsgemäß bevorzugt und neuartig ist deren Ausformung mit einem dreieckigen Verbindungsprofil. Weiterhin bevorzugt ist eine Materialstärke von 0,4 bis 0,8 mm. Solche Feinstege ermöglichen eine optimale Stabilisierung des Sicherungsringes bzw. der gesamten Kappe während Herstellung, Entformung, Lagerung, Transport und Aufbringung auf den Verschluß.

Die Anzahl der Sollbruchstellen, Verbindungsstege und Verriegelungsnocken soll gemäß einer weiter bevorzugten Ausführungsform der Erfindung zur Sicherstellung eines ordnungsgemäßen Aufreißens des Sicherungsringes gleich groß sein. Bei vier oder fünf Elementen ist das Aufbrechen und die Deformation des Sicherungsringes gleichmäßiger und optisch sowie handhabungsmäßig bei häufiger Wiederverwendung der Verschlußkappe nach dem ersten Öffnen gegenüber jeweils nur zwei Elementen ansprechender. In allen bevorzugt genannten Fällen ist aber die Deformation des Originalitäts-Sicherungsringes auffällig, der an mindestens zwei Stellen radial aufgesprengt und unter Bildung einer Zackenlinie nur noch punktuell mit dem Hauptkörper verbunden ist.

Schließlich gehört zum Gegenstand der Erfindung noch ein Verfahren zur Herstellung von Schraubverschlußkappen der vorgenannten Art, d.h. Kappen aus Kunststoffinaterial zum Verschließen von Behältern, insbesondere von Flaschen mit originalabgefüllten Getränken, gemäß dem Oberbegriff des Anspruches 12.

Hier stellt sich die zugrundeliegende Aufgabe dergestalt, daß solche Schraubverschlußkappen trotz ihrer in Bezug auf die Entformung insbesondere infolge Hinterschneidung problematischen Gestaltung in einem einstufigen Verfahren ohne Nachverformung ökonomisch hergestellt werden sollen.

Die Lösung dieser Aufgabe erfolgt gemäß den im Anspruch 12 enthaltenen Merkmale. Hauptmerkmal dieser Verfahrenserfindung ist die der parallel zur Achse erfolgenden Bewegung vorgeschaltete, als Teilrotation um die Mittelachse von Verschlußkappe und Werkzeug erfolgende Drehbewegung eines Dreh-Hohlzylinders.

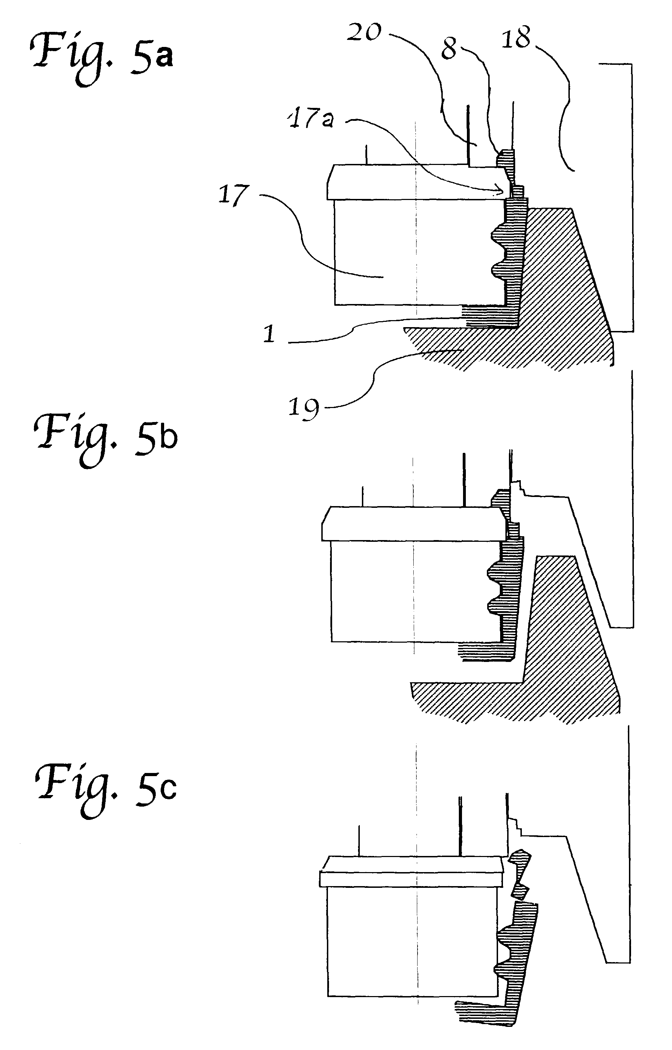

Diese ist weder den bisher genannten Entgegenhaltungen, noch der PCT-Schrift WO 94/18084 zu entnehmen, die gleichfalls nur die übliche Kombination von axialen und radialen im Sinne von parallel und senkrecht zur Mittelachse nach außen orientierten Formteil-Verschiebungen zeigt (vgl. Fig. 4).

Im folgenden wird die Erfindung anhand eines Ausführungsbeispieles näher erläutert, aus dem sich weitere Vorteile und Merkmale der Erfindung ergeben.

In der zugehörigen Zeichnung zeigt
- Fig. 1: eine teilweise geschnittene Seitenansicht einer Schraubverschlußkappe;
- Fig. 2: einen Längsschnitt durch eine auf eine Flasche aufgebrachten Schraubverschlußkappe gem. Fig. 1 im Detail;
- Fig. 3: eine Draufsicht auf einen vom Hauptkörper abgelösten Sicherungsring mit jeweils zwei Verriegelungsnockenn, Stegen und Sollbruchstellen;
- Fig. 4: eine Schraubverschlußkappe gem. Fig. 1 im Prozeß der erstmaligen Öffnung, kurz vor dem Aufreißen der unten rechts gezeigten Sollbruch stelle;
- Fig. 5a bis 5c: die Gestaltung eines Spritzgieß- oder Prägewerkzeuges und die Entformung einer erfindungsgemäßen Verschlußkappe - im Bereich des Sicherungsringes mit Veniegelungsnocke.

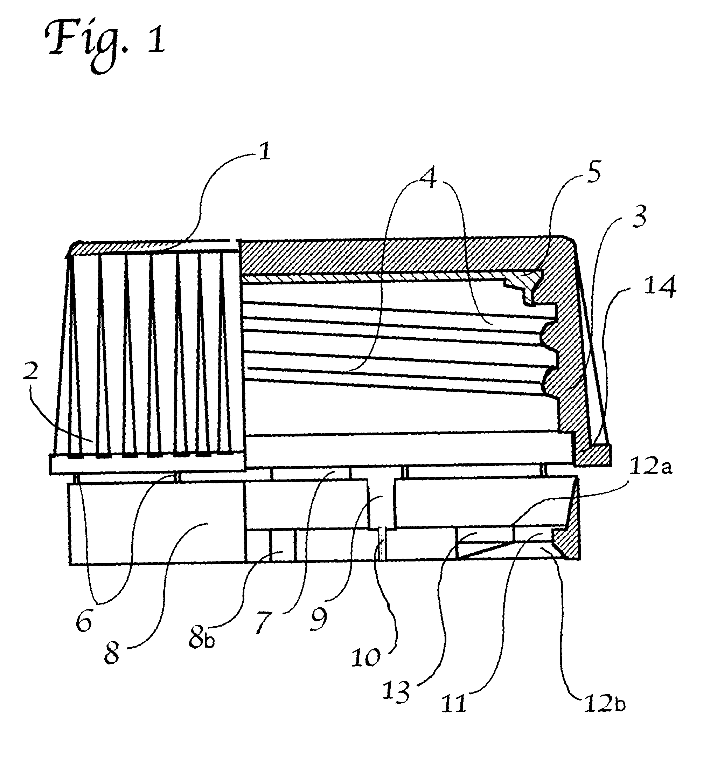

Im einzelnen sieht man in Fig. 1 den Hauptkörper 1, im rechten Bildteil senkrecht geschnitten, im linken Bildteil in Seitenansicht mit den Griffrippen 2. Die Seitenwand 3 des Hauptkörpers 1 besitzt ein an den zu verschließenden Behälter angepaßtes Gewindeprofil 4. In den Boden der Verschlußkappe ist üblicherweise eine Dichtung 5 eingelegt. Bevorzugt ist an den unteren Randbereich des Hauptkörpers 1 ein Verstärkungswulst 14 angeformt.

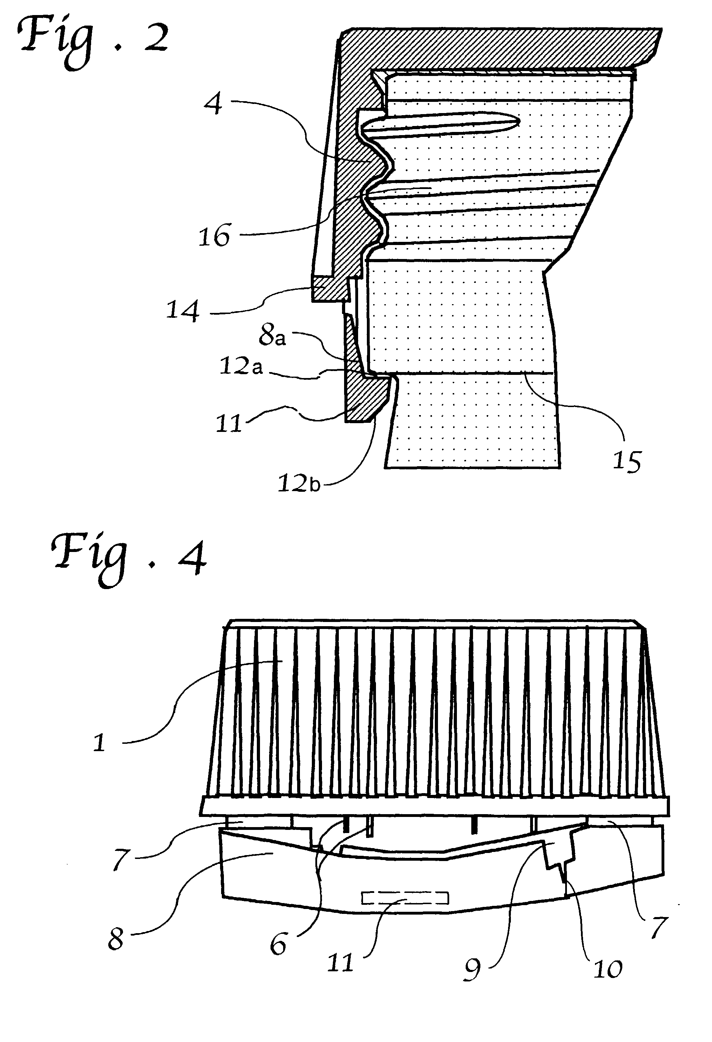

Der Hauptkörper 1 ist über beim erstmaligen Öffnen abreißbare Feinstege 6 und stärkere Verbindungsstege 7 mit dem die Originalität der Behälter- bzw. Flaschenfüllung anzeigenden Sicherungsring 8 verbunden. Im linken Bildteil sieht man auf dessen nach vorne verlaufenden Außenmantel, ansonsten auf seine hinten umlaufende, rechts nach vorne kommende Innenfläche. Das Profil des Sicherungsringes 8 ist im unteren rechten Bildteil geschnitten, aber nur teilweise zu erkennen, da der Schnitt, wie auch in Fig. 2, im Bereich eines Verriegelungsnockens 11 verläuft. Der Sicherungsring weist im oberen, hauptkörpernahen Bereich ein die Entformung erleichterndes konisch sich nach unten erweiterndes Profil 8a auf. Seine Konizität endet in Höhe der von den Ver-riegelungsnocken 11 gebildeten Schulter 12a. Von hier an verlaufen Innen- und Außenfläche bzw. -mantel des Sicherungsringes 8 parallel bis zu dessen unterem Rand, mit Ausnahme von mehreren, der Anzahl der Sollbruchstellen entsprechenden konischen Einkerbungen 8b, deren Schräge parallel zum Profil 8a verläuft. Diese Einkerbungen 8b empfehlen sich in den Fällen, in denen je nach den Eigenschaften des Kunststoffmaterials eine Erhöhung der Dehnungskapazität des Sicherungsringes 8 erwünscht ist.

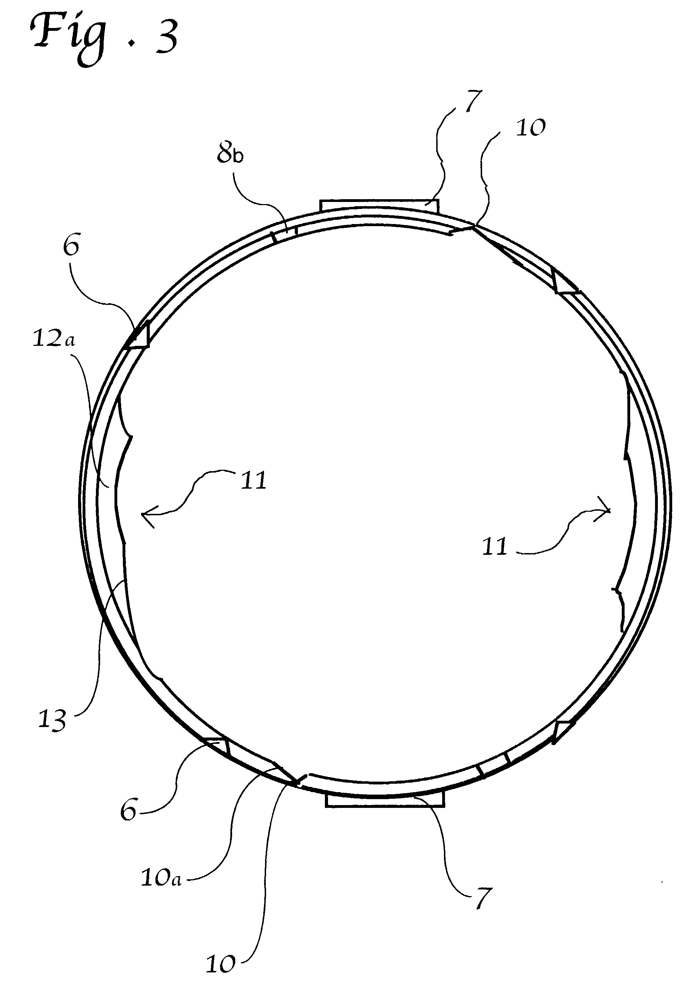

Der Sicherungsring 8 weist Aussparungen 9 auf, in deren Bereich die Sollbruchstellen 10 liegen. Die Gestaltung der Verriegelungsnocken 11 entnimmt man dem rechts unten gelegenen Bildteil der Fig. 1, sowie den anschließend behandelten Fig. 2 und 3. Die Schulter 12a verläuft bevorzugt mit etwa 90 Grad, dem Idealwert für ein effektives Untergreifen der Unterkante der Behältermündung und "Verriegeln" bzw. frühzeitigen Sprengen des Sicherungsringes 8 beim erstmaligen Öffnen der Schraubverschlußkappe. Die Schräge 12b an der dem Kappenboden abgewandten Unterseite der Verriegelungsnokken 11 erleichtert die maschinelle Aufbringung der Verschlußkappe. Die Gestaltung der Schulter 12a und der Schräge 12b einschl. der in Umfangs- bzw. Drehrichtung sich erstreckenden Auslaufkontur 13 des gezeigten Verriegelungsnockenns 11 entnimmt man den links vom geschnittenen Bildteil eingezeichneten Kanten, sowie Fig. 3.

In Fig. 2 ist ein Längsschnitt durch einen Teil eines auf eine Flasche aufgebrachten Flaschenschraubverschlusses gezeigt und zwar wiederum im Bereich eines Verriegelungsnockens 11. Die Bezugsziffern stimmen mit den in den Fig. 1 und den folgenden Fig. benutzten überein. Wie ersichtlich ist das Profil der Verschlußkappe einschließlich Sicherungsring 8 mit Schräge 12b so gewählt, daß deren Aufbringen bei den üblichen Bedingungen (Aufschrauben oder Aufpressen bei mittl. Raumtemperatur) problemlos unter einer sich alsbald rückstellenden, intermediären elastischen Aufspreizung des Sicherungsringes 8 erfolgt, wobei die Verbindungsstege 6 und 7 sich scharnierartig vorübergehend etwas nach außen bewegen. Nach dem Aufbringen der Kappe rasten die Verriegelungsnockenn 11 in die Verriegelungs- bzw. Raststellung unterhalb der Unterkante 15 bzw. des Vorsprunges der Behälter- oder Flaschenmündung ein, wie gezeigt.

Fig. 3 zeigt eine Draufsicht auf einen kompletten, vom Hauptkörper aus Darstellungsgründen abgelösten Sicherungsring 8. Er besitzt mehrere Feinstege 6, zwei Verbindungsstege 7, zwei konische Einbuchtungen 8b, zwei Sollbruchstellen 10 und zwei Verriegelungsnocken 11. Die Profile der vorgenannten Elemente sind hier gut zu erkennen einschließlich der für die Entformung notwendigen gleichsinnigen Auslaufkonturen 10a und 13 der Sollbruchstellen 10 und der Verriegelungsnocken 11. Ebenso ist die oben beschriebene unter Schutz gestellte Positionierung der Elemente zueinander erkennbar.

Fig. 4 zeigt eine Flaschenverschlußkappe mit dem in Fig. 3 gezeigten Sicherungsring 8 kurz vor dem Aufreißen. Dabei hat die Schraubverschlußkappe beim (erstmaligen) Aufdrehen die Position bereits etwas überschritten, bei der die beiden Verriegelungsnocken 11 mit ihrer Schulter 12a an der (nicht dargestellten) Unterkante 15 der Flaschen- bzw. Behältermündung zum Anliegen kommen. Dementsprechend haben die beiden jeweils etwa mittig zwischen den Verbindungsstegen befindlichen Verriegelungsnocken 11 den Sicherungsring 8 vom Hauptkörper 1 weg im Sinne eines Kräftedreiecks 7-11-7 nach unten gezogen unter Abreißen einiger Feinstege 6. Die gezeigte Deformation des Ringes 8 gilt genauso für die verborgene hintere Hälfte des Sicherungsringes 8. Im nächsten Moment reißt mind. eine Sollbruchstelle 10 infolge der erhöhten Zugkräfte in Umfangsrichtung des Sicherungsringes 8 ein und zwar unter der gegebenen Keilwirkung des vorgenannten Kräftedreiecks von der Aussparung 9 ausgehend.

Je nach Kundenbedarf können statt - wie gezeigt - zwei auch jeweils drei oder mehr Elemente 7, 10 u. 11 am Sicherungsring 8 vorgesehen sein, womit das Deformationsbild gleichmäßiger ausfällt und die Wiederverwendung des Verschlusses bis zum endgültigen Verbrauch der Originalabfüllung auch benutzungsfreundlicher ist. Zu viele Elemente 7, 10 u. 11 erschweren das Aufbringen der Verschlußkappe und ergeben möglicherweise ein zu unauffälliges Deformationsbild nach dem ersten Öffnen.

Es sei nochmals betont, daß die Schraubverschlußkappe einstückig ausgebildet ist und alle beschriebenen Teile aneinander angefoimt sind. (Eine Ausnahme betrifft die von manchen Anwendern gewünschte Einlage einer separaten, ggf. aus anderem Material bestehenden Dichtung 5). Soweit die erfindungsgemäße Kappe aus Kunststoffmaterial im Spritzgieß- oder Prägeverfahren hergestellt ist, erfolgt dies einstufig ohne Nachverformung, was eine entsprechende Gestaltung der Kappe und des Spritzgieß- oder Prägewerkzeuges erforderlich macht. Zu letzterem ist zu ergänzen, daß für die Herstellung und Entformung ein mehrteiliges, neuartige Elemente enthaltendes Werkzeug erforderlich ist, wie es in der Figurenfolge 5a bis 5c dargestellt ist.

Die Figurenfolge 5a bis 5c ist zeichnerisch auf den Bereich beschränkt, der die Herstellung und Entformung des Sicherungsringes 8 der Verschlußkappe betrifft, insbes. den Bereich einer Verriegelungsnocke 11. Es sind aber alle wesentlichen Teile des Werkzeuges dargestellt; das neuartige Entformungsprinzip und -verfahren ist somit erkenntlich.

Es beruht darauf, daß die Werkzeugteile beim Entformen vom Foermkern 17 nicht nur in axialer Richtung voneinander wegbewegt werden, wie das Außenformteil 18 und das Formunterteil 19, sondern daß ein bevorzugt als Hohlzylinder gestaltetes Teil, hier mit 20 bezeichnet, gemäß einer Ausgestaltung der Erfindung drehbar ausgebildet ist und sein Außenmantel ein Profil zur Ausformung der Innenfläche des Sicherungsringes 8 einschließlich Ausnehmungen für die Konturen der Verriegelungsnocken 11 und weiterer Elemente (vgl. 6 u. 10) aufweist sowie einen solchen Außendurchmesser in Relation zum Formkern 17, daß mittels einer Drehbewegung dieses Dreh-Hohlzylinders 20 der Sicherungsring 8 zunächst radial unter kurzzeitiger, reversibler Aufweitung entformt werden kann, wonach der Sicherungsring 8 samt Verriegelungsnockken 11 über die Außenkante 17a des Formkerns 17 geschoben und die komplette Schraubverschlußkappe mittels einer üblichen axial verlaufenden Abstreifbewegung aus dem Werkzeug entfernt werden kann.

Bei der Entformung wird also nach Verschieben bzw. Öffnung der Formteile 18 und 19 in axialer Richtung gemäß Fig. 5b der Dreh-Hohlzylinder 20 erfindungsgemäß in Drehrichtung der Schraubverschlußkappe gegen die aus Fig. 3 ersichtlichen, allmählich sich gleichsinnig verjüngenden Auslaufkonturen 10a und 13 gedreht, dabei der Sicherungsring 8 kurzzeitig reversibel aufgeweitet und dann, wie in Fig. 5c angedeutet, der Entformungsprozeß problemlos vollendet.

Das bevorzugt benutzte Kunststoffmaterial basiert auf Polyäthylen oder Polypropylen. Je nach Kundenwunsch und Anwendungszweck sind auch andere Polymere und Mischpolymerisate einsetzbar.

## Patentansprüche

1. Schraubverschlußkappe aus Kunststoffmaterial zum Verschließen von Behältern, insbesondere Flaschen mit originalabgefüllten Getränken, deren Mündungsbereich in seiner öffnungsnahen Zone ein Außengewinde (16) aufweist und im öffnungsferneren Bereich mit einer gegenüber dem Durchmesser des direkt anschließenden Halses erweiterten, eine ringförmig umlaufende Unterkante (15) bildenden Zone abschließt, wobei der ein Innengewinde (4) aufweisende Hauptkörper (1) der Schraubverschlußkappe in seinem öffnungsfernen bzw. unteren Bereich einstückig über angeformte Verbindungsstege (7) in einen beim erstmaligen Öffnen aufreißenden Originalitätssicherungsring (8) übergeht, der mehrere Sollbruchstellen (10) sowie mehrere an seinem Umfang verteilte, nach innen weisend angeformte, zwischen den Sollbruchstellen (10) befindliche Ver-riegelungsnocken (11) aufweist, deren Profil eine zur Untergreifung der Unterkante (15) der Behältermündung dienende Abkantung bzw. Schräge (vgl.12a) aufweist, wobei
a) die Abkantung (12a) der Verriegelungsnocken (11) als eine zur Mittelachse etwa rechtwinklig verlaufende Schulter bzw. Untergreifungsfläche ausgebildet ist und
b) die Verriegelungsnocken (11) zur Erleichterung des Entformungsprozesses entlang der Innenfläche des Sicherungsringes (8) eine einer entformenden Rotationsbewegung gemäße, sich allmählich verjüngende Auslaufkontur (13) aufweisen, die derart ausgebildet ist, daß
c) die Entformung des Sicherungsringes im wesentlichen unter einer teilweisen Rotation um die Achse eines die Innenkontur der Verriegelungsnocken (11) formenden Werkzeugteils (vgl. 20) durchführbar ist.

2. Schraubverschlußkappe nach Anspruch 1 dadurch gekennzeichnet, daß sowohl die Verriegelungsnocken (11) als auch die Sollbruchstellen (10) zwecks Erleichterung der Entformung entlang der Innenfläche des Sicherungringes gleichsinnige, in Drehrichtung der Schraubkappe sich verjüngende Auslaufkonturen (10a,13) aufweisen.

3. Schraubverschlußkappe nach Anspruch 1 oder 2, dadurch gekennzeichnet, daß zwischen jeweils zwei von insgesamt zwei bis vorzugsweise fünf Verbindungsstegen (7) eine Sollbruch-stelle (10) und eine Verriegelungsnocke (11) angeordnet sind, wobei die Sollbruchstelle (10) jeweils in der Nähe eines Verbindungssteges (7), die Verriegelungsnocke (11) dagegen etwa mittig zwischen zwei Stegen (7) angeordnet ist, und/oder daß der Hauptkörper über zuzüglich zu den Verbindungsstegen (7) vorgesehenen Feinstäbe (6) in den Originalitätssicherungsring (8) übergeht und/oder daß die Verriegelungsnocken (11) an der dem Hauptkörper (11) abgewandten Unterseite eine Abkantung bzw. Schräge (12b) zur Erleichterung des Aufbringens des Verschlusses besitzen.

4. Schraubverschlußkappe nach einem der vorhergehenden Ansprüche, dadurch gekennzeichnet, daß die annähernd senkrecht bzw. parallel zur Mittelachse verlaufenden Sollbruchstellen (10) im unterhalb einer ihnen zugeordneten hauptkörpernäheren Aussparung (9) des Sicherungsringes (8) verbleibenden Randmaterial desselben angeordnet sind.

5. Schraubverschlußkappe nach einem der vorhergehenden Ansprüche, dadurch gekennzeichnet, daß die Untergreifungsfläche (12a) des Verriegelungsnockens (11) zur Mittelachse eine Abweichung vom rechten Winkel bis zu +/- 5 Grad aufweist.

6. Schraubverschlußkappe nach einem der vorangehenden Ansprüche, dadurch gekennzeichnet, daß die Verriegelungsnocken (11) in Richtung Mittelachse zwecks Untergreifung etwa 1,0 bis 1,8 mm Tiefe aufweisen und/oder daß die Verriegelungsnocken (11) eine entlang der Innenfläche des Sicherungsringes (8) in Umfangs- bzw. Drehrichtung umlaufende Ausdehnung von etwa 3 bis 10 mm aufweisen und/oder daß die im Gegensatz zu den Verbindungsstegen (7) bezüglich des erstmaligen Öffnens abreißbar gestalteten Feinstege (6) ein dreieckiges Verbindungsprofil aufwiesen, dessen Spitze radial nach innen orientiert ist, wobei die mittlere Material- bzw. Profilstärke etwa 0.4 bis 0,8 mm beträgt.

7. Schraubverschlußkappe nach einem der vorangehenden Ansprüche, dadurch gekennzeichnet, daß die Anzahl der Sollbruchstellen (10), Verbindungsstege (7) und Ver-riegelungsnocken (11) gleich groß ist und jeweils zwei bis fünf beträgt.

8. Schraubverschlußkappe nach einem der vorangehenden Ansprüche, dadurch gekennzeichnet, daß der Sicherungsring (8) im hauptkörpernahen Bereich ein konisch sich nach unten bzw. zur Unterkante (15) der Flaschenmündung hin erweiterndes Profil (8a) aufweist, während im unteren, hauptkörperfernen Bereich Innen- und Außenfläche des Sicherungsringes (8) etwa parallel verlaufen - ausgenommen im Bereich der Verriegelungsnocken (11).

9. Schraubverschlußkappe nach einem der vorangehenden Ansprüche, dadurch gekennzeichnet, daß der Innendurchmesser des Anschlußbereiches des Hauptkörpers (1) an den Sicherungsring (8) einerseits und der Außendurchmesser des Sicherungsringes (8) identisch sind.

10. Schraubverschlußkappe nach einem der vorangehenden Ansprüche, gekennzeichnet durch einen ringförmig außen am Anschlußbereich des Hauptkörpers (1) umlaufenden Verstärkungswulst (14).

11. Schraubverschlußkappe nach einem der vorangehenden Ansprüche, dadurch gekennzeichnet, daß der Hauptkörper Griffrippen (2) aufweist, deren abgerundete Rücken sich zum unteren Rand bzw. Verstärkungswulst (14) hin verbreitert.

12. Verfahren zur Herstellung einer Schraubverschlußkappe aus Kunststoffmaterial zum Verschließen von Behältern, insbesondere für Flaschen mit originalabgefüllten Getränken, deren Mündungsbereich in seiner öffnungsnahen Zone ein Außengewinde (16) aufweist und im öffnungsferneren Bereich mit einer gegenüber dem Durchmesser des direkt anschließenden Halses erweiterten, eine ringförmig umlaufende Unterkante (15) bildenden Zone abschließt, wobei der ein Innengewinde (4) aufweisende Hauptkörper (1) der Schraubverschlußkappe in seinem öffnungsfernen bzw. unteren Bereich einstückig über mindestens zwei angeformte Verbindungsstege (7) in einen beim erstmaligen Öffnen aufreißenden Originalitätssicherungsring (8) übergeht, der mindestens zwei Sollbruchstellen (10) sowie mindestens zwei an seinem Umfang verteilte, nach innen weisend angeformte, zwischen den Sollbruchstellen (10) befindliche Verriegelungsnocken (11) aufweist, deren Schulter bzw. Untergreifungsfläche (12a) zur Mittelachse einen rechten Winkel mit einer Abweichung von max. +/- 5 Grad aufweist, insbesondere nach einem der vorstehenden Ansprüchen 1 bis 11, dadurch gekennzeichnet, daß die Herstellung im Spritzgieß- oder Prägeverfahren erfolgt unter Verwendung von Kunststoffmaterial auf Basis von Polyäthylen oder Polypropylen und mit einem Werkzeug, das neben einem Formkern und herkömmlichen, eine monodirektionale Form-Öffnungs-Bewegung in axialer Richtung ausführenden Werkzeugteilen (18,19) ein um die Achse rotierbar und parallel zur Achse verschiebbares, bevorzugt als Dreh-Hohlzylinder (20) ausgebildetes Formteil besitzt, dessen Außenmantel ein Profil zur Ausformung von Ausnehmungen für die Konturen der Verriegelungsnocken (11) und der Sollbruchstellen (10) aufweist sowie einen solchen Außendurchmesser in Relation zum Formkern (17), daß der Sicherungsring (8) mittels einer Drehbewegung des Formteils (20) unter kurzzeitiger elastischer Ausweitung entformt werden kann, wonach mittels einer axial verlaufenden Abstreifbewegung der Sicherungsring (8) über die Außenkante (17a) des Formkerns (17) geschoben und die komplette Schraubverschlußkappe somit von dem Werkzeug abgestreift wird.

## Claims

1. A plastic screw cap for capping receptacles, more particularly bottles of originally filled beverages, whose mouth portion comprises in its zone near to the opening an outer thread and closes off in the portion remote from the opening with a zone widened as compared to the diameter of the directly adjoining neck and forming an annular circumferential lower edge (15), the main body (1) of the screw cap comprising an inner thread (4) translating by its portion remote from the opening or lower portion integrally via molded connecting webs (7) into an anti-tamper locking ring (8) to be twisted broken open on first-time opening comprising several design frangible locations (10) as well as latching cams (11) located distributed about its circumference molded facing inwards between the design frangible locations (10), the profile of the latching cams (11) comprising a slanting or bevel edge (12a) serving to underclasp the lower edge (15) of the receptacle mouth, whereby
a) said bevel edge (12a) of said latching cams (11) is configured as a shoulder or underclasping surface area oriented roughly at right angles to the centerline and
b) said latching cams (11) to facilitate demolding comprise along said inner surface area of said locking ring (8) comprise an runout contour gradually tapered in accordance with a demolding rotating movement, said runout contour being configured such that
c) demolding said locking ring is implementable substantially by a partial rotation about the ceterline of a mold part (20) molding said inner contour of said latching cams (11).

2. The screw cap as set forth in claim 1, characterized in that both said latching cams (11) and said design frangible locations (10) comprise runout contours (10a, 13) tapered along the inner surface area of said locking ring equally sensed in the direction of rotation of said screw cap.

3. The screw cap as set forth in claim 1 or 2, characterized in that disposed between two each of a total of two to preferably five connecting webs (7) are a design frangible location (10) and a latching cam (11), each design frangible location (10) being disposed in the vicinity of a connecting web (7) whereas said latching cam (11) is disposed roughly in the middle between two webs (7), and/or said main body (1) translating via fine rods (6) provided in addition to said connecting webs (7) into said anti-tamper locking ring (8) and/or said latching cams (11) including at the underside facing away from said main body (1) a bevel or ramp (12b) to facilitate mounting said cap.

4. The screw cap as set forth in any of the preceding claims, characterized in that said design frangible locations (10) oriented near perpendicular or parallel to the centerline are arranged in the edge material remaining below a recess (9) of said locking ring (8) assigned to the design frangible locations (10) nearer to said main body.

5. The screw cap as set forth in any of the preceding claims, characterized in that said underclasping surface area (12a) of said latching cam (11) comprises a departure from the right angle of up to ± 5 deg. relative to the centerline.

6. The screw cap as set forth in any of the preceding claims, characterized in that said latching cams (11) comprise in the direction of the centerline a depth of approx. 1.0 to 1.8 mm for underclasping and/or said latching cams (11) comprising an extent of approx. 3 to 10 mm along said inner surface area of said locking ring (8) circumferentially or rotatively and/or said fine webs (6) configured frangible on first-time opening, unlike said connecting webs (7), comprise a triangular conecting profile, the apex of which is oriented radially inwards, the mean material or profile thickness being approx. 0.4 to 0.8 mm.

7. The screw cap as set forth in any of the preceding claims, characterized in that the number of design frangible locations (10), connecting webs (7) and latching cams (11) is equal and is two to five in each case.

8. The screw cap as set forth in any of the preceding claims, characterized in that said locking ring (8) comprises in said portion near to said main body a profile flared conically downwards or relative to said lower edge (15) of said bottle mouth, whilst - except in said portion of said latching cams (11) - said inner and outer surface areas of said locking ring (8) are oriented roughly parallel.

9. The screw cap as set forth in any of the preceding claims, characterized in that the inner diameter of the adjoining portion of said main body (1) at the locking ring (8), on the one hand, and the outer diameter of said locking ring (8), on the other, are identical.

10. The screw cap as set forth in any of the preceding claims, characterized by an annular reinforcing bead (14) outwardly circumscribing the adjoining portion of said main body (1).

11. The screw cap as set forth in any of the preceding claims, characterized in that said main body comprises finger serrations (2), the rounded backs of which are widened towards said lower edge or reinforcing bead (14).

12. A method of fabricating a plastic screw cap for capping receptacles, more particularly bottles of originally filled beverages, whose mouth portion comprises in its zone near to the opening an outer thread (16) and closes off in the portion remote from said opening with a zone widened as compared to the diameter of the directly adjoining neck and forming an annular circumferential lower edge (15), the main body (1) of said screw cap comprising an inner thread (4) translating by its portion remote from said opening or lower portion integrally via at least two molded connecting webs (7) into an anti-tamper locking ring (8) to be twisted broken open on first-time opening comprising at least two design frangible locations (10) as well as at least two latching cams (11) located distributed about its circumference molded facing inwards between said design frangible locations (10), the shoulder or underclasping surface area (12a) of said latching cams (11) comprising a departure from the right angle of max. ± 5 deg. relative to the centerline, more particularly as set forth in any of the preceding claims 1 to 11, characterized in that fabrication is done by injection molding or compression molding employing a polythene- or polypropylene-based plastics material and a mold including in addition to a mold core and conventional mold parts (18, 19) executing an axial monodirectional mold opening movement, a molding configured rotatable about the axis and shiftable parallel thereto preferably as a rotating hollow cylinder (20), the outer shell of which comprises a profile for forming recesses for the contours of said latching cams (11) and design frangible locations (10) as well as an outer diameter in relation to said mold core (17) such that said locking ring (8) is demoldable by means of a rotating movement of said molding (20) with a temporary elastic expansion, after which by means of an axially oriented stripper movement said locking ring (8) is shifted over the outer edge (17a) of said mold core (17) and the complete screw cap thus stripped from the mold.

## Revendications

1. Capuchon à vis en matière plastique pour fermer des récipients, notamment des bouteilles avec des boissons d'embouteillage original, dont le secteur du goulot présente dans sa zone proche de l'ouverture un filet extérieur (16) et se termine dans le secteur plus éloigné de l'ouverture par une zone formant, par rapport au diamètre du col venant immédiatement après, un rebord inférieur annulaire circonférentiel (15), le corps principal (1) du capuchon à vis pourvu d'un filet intérieur (4), tout en ne formant qu'une seule pièce, se convertissant dans sa zone plus éloignée de l'ouverture ou inférieure, par l'intermédiaire de barrettes de jonction moulées (7), en une bague de garantie d'origine (8) se déchirant à la première ouverture et comportant plusieurs points destinés à la rupture (10) ainsi que plusieurs ergots de verrouillage (11) moulés, repartis sur sa circonférence, dirigés vers l'intérieur et se trouvant entre les points destinés à la rupture (10), dont le profil présente un chanfrein ou un biseau (12a) servant à avoir prise sous le rebord inférieur (15) du goulot du récipient, alors que
a) le chanfrein (12a) des ergots de verrouillage (11) est conçu comme épaulement ou surface de prise s'étendant à peu près perpendiculairement à l'axe central, et que
b) les ergots de verrouillage (11), pour faciliter le processus de démoulage, comportent le long de la surface intérieure de la bague de garantie (8) un contour en saillie (13) adapté à un mouvement rotatif de démoulage et se rétrécissant lentement, lequel contour est conçu de manière à ce que
c) le démoulage de la bague de garantie puisse être réalisé en substance sous une rotation partielle autour de l'axe d'une partie d'outil (cf. 20) formant le contour intérieur des ergots de verrouillage (11).

2. Capuchon à vis selon la revendication 1, caractérisé en ce que pour faciliter le démoulage, aussi bien les ergots de verrouillage (11) que les points destinés à la rupture (10) comportent le long de la surface intérieure de la bague de garantie des contours en saillie (10a, 13), de même sens et se rétrécissant en direction de la rotation du capuchon à vis.

3. Capuchon à vis selon la revendication 1 ou 2, caractérisé en ce qu'entre respectivement deux de 2 jusqu'à de préférence 5 barrettes de jonction (7), il y a un point destiné à la rupture (10) et un ergot de verrouillage (11), le point destiné à la rupture (10) étant disposé respectivement à proximité d'une barrette de jonction (7) et l'ergot de verrouillage (11) étant par contre disposé à peu près centralement entre deux barrettes (7), et/ou en ce que le corps principal, par l'intermédiaire de fines baguettes (6) prévues additionnellement aux barrettes de jonction (7), se convertit en bague de garantie d'origine (8), et/ou en ce que les ergots de verrouillage (11), pour faciliter la mise en place du capuchon, possèdent un chanfrein ou biseau (12b) sur le côté inférieur détourné du corps principal (11).

4. Capuchon à vis selon l'une des revendications précédentes, caractérisé en ce que les points destinés à la rupture (10) à peu près perpendiculaires ou parallèles à l'axe central sont disposés dans le matériau marginal restant sous un évidement (9) de la bague de garantie (8), lequel évidement leur est associé et plus proche de corps principal.

5. Capuchon à vis selon l'une des revendications précédentes, caractérisé en ce que la surface de prise (12a) de l'ergot de verrouillage (11) a par rapport à l'axe central un écart de l'angle droit allant jusqu'à +/- 5 degrés.

6. Capuchon à vis selon l'une des revendications précédentes, caractérisé en ce que les ergots de verrouillage (11) ont en direction de l'axe central une profondeur d'environ 1,0 à 1,8 mm pour avoir prise, et/ou en ce que les ergots de verrouillage (11) ont le long de la surface intérieure de la bague de garantie (8) une étendue d'environ 3 à 10 mm en direction circonférentielle ou rotative, et/ou en ce que les fines baguettes (6), qui contrairement aux barrettes de jonction (7) sont conçues pour se déchirer à la première ouverture, ont un profil de jonction triangulaire dont la pointe est orientée radialement vers l'intérieur, l'épaisseur moyenne du matériau ou du profil étant d'environ 0,4 à 0,8 mm.

7. Capuchon à vis selon l'une des revendications précédentes, caractérisé en ce que le nombre des points destinés à la rupture (10), des barrettes de jonction (7) et des ergots de verrouillage (11) est identique et qu'il va respectivement de deux à cinq.

8. Capuchon à vis selon l'une des revendications précédentes, caractérisé en ce que la bague de garantie (8) dispose dans la zone proche du corps principal d'un profil conique (8a) s'élargissant vers le bas ou vers le bord inférieur (15) du goulot de la bouteille, alors que dans la zone inférieure, plus éloignée du corps principal, les surfaces intérieure et extérieure de la bague de garantie (8) sont d'orientation à peu près parallèle - excepté dans la zone des ergots de verrouillage (11).

9. Capuchon à vis selon l'une des revendications précédentes, caractérisé en ce que le diamètre intérieur de la zone de jonction du corps principal (1) avec la bague de garantie (8) d'une part et le diamètre extérieur de la bague de garantie (8) d'autre part sont identiques.

10. Capuchon à vis selon l'une des revendications précédentes, caractérisé par un renforcement (14) annulaire circonférentiel extérieur à proximité de la zone de jonction du corps principal (1).

11. Capuchon à vis selon l'une des revendications précédentes, caractérisé en ce que le corps principal comporte des nervures de saisie (2), dont le dos arrondi s'élargit vers le bord inférieur ou renforcement (14).

12. Procédé de fabrication d'un capuchon à vis en matière plastique pour fermer des récipients, notamment des bouteilles avec des boissons d'embouteillage original, dont le secteur du goulot présente dans sa zone proche de l'ouverture un filet extérieur (16) et se termine dans le secteur plus éloigné de l'ouverture par une zone formant, par rapport au diamètre du col venant immédiatement après, un rebord inférieur annulaire circonférentiel (15), le corps principal (1) du capuchon à vis pourvu d'un filet intérieur (4), tout en ne formant qu'une seule pièce, se convertissant dans sa zone plus éloignée de l'ouverture ou inférieure, par l'intermédiaire d'au moins deux barrettes de jonction moulées (7), en une bague de garantie d'origine (8) se déchirant à la première ouverture et comportant au moins deux points destinés à la rupture (10) ainsi qu'au moins deux ergots de verrouillage (11) disposés sur sa circonférence, moulés, dirigés vers l'intérieur et se trouvant entre les points destinés à la rupture (10), dont l'épaulement ou la surface de prise (12a) a par rapport à l'axe central un angle droit avec un écart de +/- 5 degrés au maximum, notamment selon l'une des revendications 1 à 11 ci-dessus, caractérisé en ce que la fabrication est effectuée par moulage par transfert ou par matriçage, en utilisant une matière plastique à base de polyéthylène ou de polypropylène, et avec un outil qui, à côté d'un noyau et d'éléments d'outil traditionnels (18, 19) effectuant un mouvement monodirectionnel d'ouverture du moule en direction axiale, dispose d'un élément de moule pouvant tourner autour d'un axe et coulisser parallèlement à l'axe, conçu de préférence en tant que cylindre creux rotatif (20), dont le manteau extérieur comporte un profil pour former des évidements pour les contours des ergots de verrouillage (11), et des points destinés à la rupture (10), et a un tel diamètre extérieur, par rapport au noyau (17), que la bague de garantie (8) peut être démoulée au moyen d'un mouvement rotatif de l'élément de moule (20) et avec un élargissement élastique de courte durée, après quoi la bague de garantie (8) est poussée au moyen d'un mouvement de dévêtissement axial par-dessus le bord extérieur (17a) du noyau (17) et le capuchon à vis intégral est retiré de l'outil.
